# EUROPEAN PATENT APPLICATION

(11) **EP 2 724 629 A1**
(43) Date of publication of application: **30.04.2014**
(21) Application number: 13187968.6
(22) Date of filing: 26.03.2007
(51) Int. Cl.: A23P 1/08, A23G 1/54, A23G 1/30, A23L 1/00, A21D 13/00, A23G 3/54

(54) **Anti-scuff coating for chocolate**

(30) Priority: 24.03.2006 US 785549 P
(62) Divisional of application: 07753976.5
(71) Applicant: Mantrose-Haeuser Co. Inc., Attleboro, MA 02073 (US)
(72) Inventor: Zhong, Bin, Cumberland, RI 02862 (US); Mcweeney, Margo, East Boston, RI 02128 (US); Santos, Stephen, A., Cumberland, RI 02864 (US); Mcgregor, Alan, Bonnybridge, Stirlingshire, FK4 1PD (GB)
(74) Representative: Stuart, Ian Alexander

(57) **Abstract**

Provided herein are methods for forming a coating on the external surface of a chocolate-coated product such as a biscuit, cookie or bar. The method comprises applying at least one layer of a coating composition comprising a solvent selected from water, ethanol, and isopropanol, or any combination thereof and one or more film forming agents to the external surface of the product, and then drying the coating composition to provide a dried coating or film on the external surface of the chocolate. The dried coating renders the external surface of the chocolate more resistant to abrasion or scuffing during processing, packaging, storage, and/or transport. The coating composition of the present invention cures or dries in 30 minutes or less. In certain embodiments, the film or coating cures in 15 minutes or less. In certain embodiments, the film or coating cures in 10 minutes or less.

## Description

This application claims the benefit of US Provisional Application No. 60/785,549, filed March 24, 2006, which is incorporated herein by reference in its entirety.

### FIELD OF THE INVENTION

The present invention relates to methods and products for forming an anti-scuff coating on solid chocolate and chocolate-coated or chocolate-enrobed products.

### BACKGROUND

In addition to candies or confectionaries, a number of products comprise a layer of chocolate, particularly an external layer of chocolate. These include chocolate-coated biscuits, chocolate-coated cookies, chocolate-coated cakes, molded chocolate candies, chocolate-coated bars, etc. During processing, packaging, storage and/or transport of these products, the external surface of the chocolate layer may become scuffed, scratched or marred, thereby reducing the consumer appeal of the product. Thus, methods and compositions which can be used to improve the scuff resistance of the external surface of the chocolate layer, particularly during processing and packaging, are desirable. Compositions and methods that quickly produce a chocolate layer whose external surface is more resistant to scuffing, and thus reduce the amount of time required for preparing the solid chocolate or chocolate-coated product, are particularly desirable.

### SUMMARY OF THE INVENTION

The present invention provides methods and compositions for forming a coating on the external surface of a solid chocolate or chocolate-coated product. These methods and compositions provide a solid chocolate product or a chocolate coated product that is more resistant to abrasion or scuffing during processing, packaging, storage, and/or transport. The methods and compositions of the present invention provide a film or coating that cures rapidly, typically in 30 minutes or less. In certain embodiments, the film or coating cures in 15 minutes or less. In certain embodiments, the film or coating cures in 10 minutes or less. In certain embodiments, the product that is formed in accordance with the present methods comprises a chocolate layer that is resistant to fat bloom. In certain embodiments, the chocolate layer whose external surface is coated in accordance with the present methods also exhibits improved retention of fine detail and/ or decoration during processing and or packaging. In certain embodiments, the chocolate layer that is coated in accordance with the present methods is glossy.

The methods of the present invention comprise the steps of applying at least one layer of a coating composition to an external surface of chocolate in a solid chocolate or chocolate-coated product, and drying the composition to provide a product comprising a chocolate layer whose external surface comprises a dried film of the coating composition. The external surface of a chocolate layer that is treated in accordance with the present method is more resistant to scuffing or abrasion than a chocolate layer whose external surface does not comprise the dried film. The coating composition that is used in the present method comprises a solvent selected from water, one or more low molecular weight alcohols, and any mixture thereof, and at least one film forming agent that imparts flexibility and strength to the dried coating. In certain embodiments, the composition comprises at least two film forming agents, wherein one of the two film forming agents imparts flexibility and strength to the dried coating and the other of the two film forming agents increases the solids content of the coating composition, and/or alters the glossiness of the dried coating, in addition to imparting flexibility and strength to the dried coating.

In certain embodiments, particularly those in which the coating composition comprises water and no alcohol, the coating composition comprises a wetting agent or surfactant. In certain embodiments, particularly where the coating composition is water-based, the coating composition also comprises a preservative.

In certain embodiments, the coating composition comprises colorants that produce a chocolate-colored coating on the surface of the chocolate. In other embodiments, the coating composition comprises colorants that produce a colored coating that is not a chocolate color. In other embodiments, the coating composition lacks colorants. The dried coatings that are produced using such a coating composition, preferably, are transparent or semi-transparent, as determined visually.

### DESCRIPTION OF THE EMBODIMENTS

The present invention will now be described by reference to more detailed embodiments. This invention may, however, be embodied in different forms and should not be construed as limited to the embodiments set forth herein. Rather, these embodiments are provided so that this disclosure will be thorough and complete, and will fully convey the scope of the invention to those skilled in the art.

Unless otherwise defined, all technical and scientific terms used herein have the same meaning as commonly understood by one of ordinary skill in the art to which this invention belongs. The terminology used in the description of the invention herein is for describing particular embodiments only and is not intended to be limiting of the invention. As used in the description of the invention and the appended claims, the singular forms "a," "an," and "the" are intended to include the plural forms as well, unless the context clearly indicates otherwise. All publications, patent applications, patents, and other references mentioned herein are expressly incorporated by reference in their entirety.

Unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, and not as an attempt to limit the application of the doctrine of equivalents to the scope of the claims, each numerical parameter should be construed in light of the number of significant digits and ordinary rounding approaches.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements. Every numerical range given throughout this specification will include every narrower numerical range that falls within such broader numerical range, as if such narrower numerical ranges were all expressly written herein.

The present invention provides compositions and methods for improving the scuff resistance of the surface on a solid chocolate, chocolate-coated, or chocolate-enrobed product. Such products include, but are not limited to, molded chocolate confectionaries, including solid chocolate confectionaries, chocolate-coated or chocolate-enrobed products including, but not limited to, chocolate-coated or chocolate-enrobed biscuits or cookies, and chocolate-coated or chocolate-enrobed bars. The term "chocolate" as used herein refer to all chocolate or chocolate-like compositions with a temperable fat phase. The term is intended to include all chocolate and chocolate-like compositions that contain at least one cocoa or cocoa-like component. The term is intended, for example, to include standardized and non-standardized chocolates, i.e., including chocolates with compositions conforming to the U.S. Standards Of Identity (SOI) and compositions not conforming to the U.S. Standards Of Identity, respectively, including dark chocolate, baking chocolate, milk chocolate, sweet chocolate, semi-sweet chocolate, buttermilk chocolate, skim-milk chocolate, mixed dairy product chocolate, low fat chocolate, white chocolate, non-standardized chocolates and chocolate-like compositions, unless specifically identified otherwise.

The methods of the present invention comprise the steps of applying at least one layer of a coating composition to an external surface of the chocolate layer of the product, and drying the coating composition to provide a film or coating which imparts improved scuff-resistance to the external surface of the chocolate layer. The coating compositions of the present invention comprise a solvent selected from water, a low molecular weight alcohol such as isopropanol or, preferably, ethanol and mixtures thereof, and at least one film forming agent that provides a dried coating that is flexible and more resistant to scuffing or scratching than the underlying chocolate surface. In certain embodiments, the dried coating has sufficient flexibility to not crack even when the coating is applied to sharp edges.

In certain embodiments, the coating composition comprises one or more of the following film forming agents (referred to hereinafter collectively as "first film forming agents"): xanthan gum, gum arabic, guar gum, locust bean gum, agar, alginates, gum ghatti, gum karaya, gum tragacanth, chitosan, carageenans, methylcellulose, carboxymethylcellulose, hydroxypropyl methylcellulose, ethylcellulose, hydroxypropyl cellulose, pectin, gelatin, modified starch, dextrin, zein, and whey protein. In certain embodiments, the coating composition comprises shellac, as a first film forming agent. In certain embodiments, the first film forming agent is one or more of the following: xanthan gum, gum Arabic, hydoxypropyl cellulose, ethyl cellulose, modified starch, dextrin, zein, and whey protein. In certain embodiments, particularly where the coating composition comprises water, the first film forming agent is one or more of the following: xanthan gum, gum Arabic, guar gum, locust bean gum, agar, alginates, gum ghatti, gum karaya, gum tragacanth, chitosan, carageenans, methylcellulose, carboxymethylcellulose, hydroxypropyl methylcellulose, hydroxypropyl cellulose, pectin, gelatin, modified starch, dextrin and whey protein. In certain embodiments, particularly, where the coating composition comprises ethanol, isopropanol or both, the first film forming agent is one or more of the following: ethylcellulose, hydroxypropyl cellulose, zein, and shellac.

In certain embodiments, particularly those in which the coating composition comprises water, the coating composition further comprises one or more additional film forming agents, referred to hereinafter collectively as "second film forming agents". The second film forming agents are used to increase the solids content of the composition, to produce a coating composition that dries quickly, and/or to adjust the glossiness of the dried coating. In one embodiment, the second film forming agent comprises maltodextrin. In other embodiments, the second film forming agent comprises starch, sucrose, maltose, fructose, dextrose, glucose, sugar polyols, corn syrup, and shellac, or any combination of these ingredients and/or maltodextrin.

In certain embodiments, particularly those in which the solvent comprises water, the coating composition may also comprise a wetting agent or surfactant. Examples of suitable wetting agents or surfactants include, but are not limited to, glycerol monoleate, polyoxyethylene (20) sorbitan monoleate, polyoxyethylene (20) sorbitan monostearate, polyoxyethylene (20) sorbitan tristearate, sorbitan monostearate, sorbitan monooleate, sorbitan monolaurate, sorbitan monopalmitate, glycerol monostearate, sorbitan tristearate, sorbitan trioleate, lecithin, and a sugar ester.

In certain embodiments, particularly those in which the solvent comprises an alcohol, it is preferred that alcohol be a denatured alcohol. Agents which can be used to denature alcohols such as ethanol include, but are not limited to, acetone, ethyl acetate, shellac and isopropanol. Thus, in certain embodiments the coating composition may comprise acetone and ethyl acetate, and/or shellac as well as ethanol and/or isoproponal. Any agent which is used in the food industry to denature alcohol may be included in the composition.

In certain embodiments, particularly those in which the solvent comprises water, the composition may also include a preservative. Examples of such preservatives include, but are not limited to, citric acid, potassium sorbate, sodium benzoate, or any combination thereof.

In certain embodiments, the composition comprises colorants that impart a chocolate color to the coating. Good results have been obtained using a red dye such as FD& C Red # 40, a yellow dye such as FD& C Yellow # 5, a blue dye such as FD&C Blue #1 and a yellow dye such as FD& C yellow # 6. Examples of other colorants that can be used to produce a chocolate colored coating include, but are not limited to, FD&C Red # 40 aluminum lake, FD&C Yellow # 5 aluminum lake, FD&C blue # 1 aluminum lake, and FD&C Yellow # 6 aluminum lake. The amount of colorants used in the composition depends upon the desired color and ranges from 0 to 30 weight percent of the composition. In certain embodiments, the composition comprises colorants, such as titanium dioxide, that impart a different color to the coating. In certain embodiments, the composition lacks or is free of colorants.

In certain embodiments, particularly those in which the composition is primarily water-based, the coating composition comprises from 30 to 99 weight percent of water, from 0.01 to 40 weight percent of a first film forming agent, from 0.01 to 40 weight percent of a second film forming agent, from 0.01 to 5 weight percent of a surfactant and, from 0 to 2 weight percent of a preservative. In certain embodiments, particularly those in which the solvent comprises water, the coating composition comprises from 30 to 99 weight percent of water, from 0.01 to 50 weight percent of a first film forming agent, from 0 to 50 weight percent of a second film forming agent, from 0.01 to 5 weight percent of a surfactant and, from 0 to 2 weight percent of a preservative.

In certain embodiments where the composition is primarily water-based, the coating composition comprises 0.02 % by weight or more of the first film forming agent. In certain embodiments where the composition is primarily water-based, the coating composition comprises 0.05 % by weight or more of the first film forming agent. In certain embodiments where the composition is primarily water-based, the coating composition comprises 0.1 % by weight or more of the first film forming agent. In certain embodiments where the composition is primarily water-based, the coating composition comprises 0.2 % by weight or more of the first film forming agent. In certain embodiments where the composition is primarily water-based, the coating composition comprises 1.0 % by weight or more of the first film forming agent. In certain embodiments where the composition is primarily water-based, the coating composition comprises 35% by weight or less of the first film forming agent. In certain embodiments where the composition is primarily water-based, the coating composition comprises 30% by weight or less of the first film forming agent.

In certain embodiments where the composition is primarily water-based, the coating composition comprises 0.02 % by weight or more of the second film forming agent. In certain embodiments where the solvent comprises water, the coating composition comprises 0.05 % by weight or more of the second film forming agent. In certain embodiments where the composition is primarily water-based, the coating composition comprises 0.1 % by weight or more of the second film forming agent. In certain embodiments where the composition is primarily water-based, the coating composition comprises 0.2 % by weight or more of the second film forming agent. In certain embodiments where the composition is primarily water-based, the coating composition comprises 1.0 % by weight or more of the second film forming agent. In certain embodiments where the composition is primarily water-based, the coating composition comprises 5 to 35% by weight of the second film forming agent. In certain embodiments where the composition is primarily water-based, the coating composition comprises 5- 30% by weight of the second film forming agent.

In certain embodiments where the coating composition.is primarily alcohol-based, the composition comprises from 60 to 99.9%, preferably from 70 to 99%, by weight of alcohol, from 0.01 to 40% by weight of the first film forming agent, and from 0 to 35% by weight of the second film forming agent. In certain embodiments where the composition is primarily alcohol-based, the coating composition comprises 0.02 % by weight or more of the first film forming agent. In certain embodiments where the composition is primarily alcohol-based, the coating composition comprises 0.05 % by weight or more of the first film forming agent. In certain embodiments where the composition is primarily alcohol-based, the coating composition comprises 0.1 % by weight or more of the first film forming agent. In certain embodiments where the composition is primarily alcohol-based, the coating composition comprises 0.2 % by weight or more of the first film forming agent. In certain embodiments where the composition is primarily alcohol-based, the coating composition comprises 1.0 % by weight or more of the first film forming agent. In certain embodiments, where the composition is primarily alcohol-based, the coating composition comprises 35% by weight or less of the first film forming agent. In certain embodiments where the composition is primarily alcohol-based, the coating composition comprises 30% by weight or less of the first film forming agent.

In certain embodiments, where the solvent is a mixture of water and alcohol, the coating composition comprises from 30 to 99.9% by weight of the solvent, from 0.01 to 40% by weight of the first film forming agent, from 0 to 40% by weight of the second film forming agent, from 0 to 5 % by weight of surfactant, and from 0 to 2% by weight of a preservative. In certain embodiments, where the solvent is a mixture of water and alcohol, the coating composition comprises from 30 to 99.9% by weight of the solvent, from 0.01 to 50% by weight of the first film forming agent, from 0 to 50% by weight of the second film forming agent, from 0 to 5 % by weight of surfactant, and from 0 to 2% by weight of a preservative.

The coating composition preferably has a solids content of from 0.1 to 70 weight percent, preferably from 1.0 to 70 weight percent. In certain embodiments, the coating composition has a solids content of 60 weight percent or less. In certain embodiments in which the composition is primarily alcohol-based, the coating composition has a solids content of 40%, preferably, 35% by weight or less. In certain embodiments in which the composition is primarily water-based, the coating composition has a solids content of 20% by weight or more. In certain embodiments, the coating composition that is used in the present methods has a viscosity of 2000 centipoise or less. In certain embodiments, the coating composition has a viscosity of from 10 to 1500 centipoise. In certain embodiments, the coating composition has a viscosity of from 100 to 1500 centipoise. In certain embodiments, the coating composition has a viscosity of from 100 to 1200 centipoise.

### Method of Preparation

The composition is prepared by dissolving the first film forming agent in the solvent. In those embodiments where the solvent is mostly or entirely water, the solvent is first heated to a temperature of from 40-80°C, preferably from 60-70°C. In certain embodiments, particularly when the composition is a water-based formulation, a surfactant and the second film forming agent are then added to the heated mixture. Once all of the additives are dissolved in the solvent, the mixture is cooled to a temperature of 25-40°C, preferably from 25-30°C, and the colorants, if being used, are dispersed in the solution. The preservative, if being used, is also added to the cooled solution/dispersion.

The coating composition may be applied to the solid chocolate or chocolate-coated, or chocolate-enrobed product by spraying the composition on the surface of the chocolate or by enrobing the solid chocolate or chocolate coated product in the composition at room temperature. The coating composition, preferably, is applied at a thickness of from greater than 0 to 50 mil. The coating is then dried, preferably in air at a temperature below 65°F and a relative humidity of less than 50%. A faster drying or cure can be achieved using a number of techniques including, but not limited to, drying the coating composition in moving or blowing air. A faster drying or cure of the coating composition can also be achieved by subjecting the coated product to infrared (IR) radiation for 1-30 seconds prior to drying. In those instances where IR radiation is used to dry the coating, it is preferred that the coating be colored, preferably chocolate colored.

### Characteristics of the Coating or Film

The dried coating or film that is formed on the surface of the chocolate may comprise one or more layers of the coating composition The dried coating, preferably, is smooth and uniform without foreign flavors. The gloss of the dried coating can be altered based on the film former or combination of film forming agents used. The dried coating provides a product having an external chocolate surface that is more resistant to scuffing than a chocolate surface that lacks such a dried film or coating.

### Methods of Testing Scuff Resistance of the Coated Chocolate Layer

The anti-scuffing characteristics of the dried coating may be assayed by placing solid chocolate products or chocolate-covered products that have been coated in accordance with the present method (test products) or that have not been coated (control products) in a container such as a bottle, attaching the container to a wheel, rotating the wheel for a set period of time, e.g. one minute, and then visually inspecting the outer surface of the test products and control products. Good results have been obtained using a wheel that has a diameter of about 18 inches, a revolving speed of about 30 cycles/minute, and a test period of about 1 minute. As shown in the examples below, this assay can clearly differentiate the antiscuffing resistance of chocolate coated biscuit comprising a coating prepared in accordance with the present method from a chocolate coated biscuit that has not been coated. Other methods that are within the capabilities of those of ordinary skill in the art may also be used to assay the scuff resistance of the coated and uncoated chocolate surfaces of the test and control products.

### EXAMPLES

The following examples are for purposes of illustration only and are not intended to limit the scope of the claims which are appended hereto.

### Example 1

A coating composition for chocolate was prepared using the following ingredients.

| | |
|---|---|
| Water | 78.2% |
| Maltodextrin | 20.0% |
| Xanthan Gum | 0.2% |
| Glycerol monooleate | 1.0% |
| Citric acid | 0.5% |
| Potassium sorbate | 0.1% |

To prepare the coating composition, the water was first heated to 70°C and the first film forming agent, xanthan gum, dissolved in the heated water. Thereafter, maltodextrin, the second film forming agent, and the surfactant were added to the mixture. Once the additives had dissolved in the water, the solution was cooled to a temperature of about 25°C and the preservatives were dissolved in the solution.

The coating composition was applied and dried in air at a temperature below 65°F and a relative humidity of less than 50%. The coating dried within 10 to 15 minutes. The resistance to abrasion was tested as described above. The results showed that biscuits comprising an external chocolate layer coated in accordance with the present method had little scuff as compared to biscuits whose chocolate layer lacked the coating.

### EXAMPLE 2

A coating composition for chocolate was prepared using the following ingredients.

| | |
|---|---|
| Water | 78.2202% |
| Maltodextrin | 19.9440% |
| Xanthan Gum | 0.1994% |
| Glycerol monooleate | 0.9972% |
| Citric acid | 0.4986% |
| Potassium sorbate | 0.0997% |
| FD&C Red #40 | 0.0182% |
| FD&C Yellow #5 | 0.0174% |
| FD&C Blue #1 | 0.0029% |
| FD&C Yellow #6 | 0.0025% |

To prepare the coating composition, the water was first heated to 70°C and the first film forming agent, xanthan gum, dissolved in the heated water. Thereafter, maltodextrin, the second film forming agent, and the surfactant were added to the mixture. Once the additives had dissolved in the water, the solution was cooled to a temperature of about 25°C and the colorants and preservatives were dissolved in the solution.

The coating composition was applied to chocolate covered biscuits, and dried in air at a temperature below 65°F and a relative humidity of less than 50%. The coating dried within 10 to 15 minutes. The resistance to abrasion was tested as described above. The results showed that biscuits comprising an external chocolate layer coated in accordance with the present method had little scuff as compared to biscuits whose chocolate layer lacked the coating.

### EXAMPLE 3

A coating composition for chocolate was prepared using the following ingredients.

| | |
|---|---|
| Hydroxypropylcellulose | 2% |
| Denatured alcohol | 98% |

To prepare the composition, hydroxypropylcellulose was dissolved in the denatured alcohol at room temperature. The coating composition was applied to chocolate covered biscuits, and dried in air at a temperature below 65°F and a relative humidity of less than 50%. The coating dried within 3 to 8 minutes. The resistance to abrasion was tested as described above. The results showed that biscuits comprising a chocolate layer coated in accordance with the present method had little scuff as compared to biscuits whose chocolate layer lacked the coating.

### EXAMPLE 4

A coating composition for chocolate was prepared using the following ingredients.

| | |
|---|---|
| Shellac | 5% |
| Hydroxypropylcellulose | 3% |
| Denatured alcohol | 92% |

To prepare the composition, shellac and hydroxypropylcellulose were dissolved in the denatured alcohol at room temperature.

The coating composition was applied to chocolate covered biscuits, and dried in air at a temperature below 65°F and a relative humidity of less than 50%. The coating dried within 3 to 8 minutes. The resistance to abrasion was tested as described above. The results showed that biscuits comprising a chocolate layer coated in accordance with the present method had little scuff as compared to biscuits whose chocolate layer lacked the coating.

Some aspects of the invention are summarised in the following clauses A to W.
A. A method of increasing the scuff resistance of a surface on a solid chocolate, chocolate-coated or chocolate-enrobed product, comprising:
   a) applying a coating composition to the surface of the chocolate, wherein the coating composition comprises:
      i) a solvent selected from water, ethanol, and isopropanol, or any combination thereof;
      ii) one or more first film forming agent, wherein the one or more first film forming agents provide strength and flexibility to a film that is formed when the coating composition is dried, and
   b) drying the coating composition to provide a solid chocolate, chocolate-coated or chocolate-enrobed product having a surface with increased scuff resistance.
B. The method of clause A, wherein the one or more first film forming agents are selected from xanthan gum, gum arabic, guar gum, locust bean gum, agar, alginates, gum ghatti, gum karaya, gum tragacanth, chitosan, carageenans, methylcellulose, ethylcellulose, carboxymethylcellulose, hydroxypropyl methylcellulose, hydroxypropyl cellulose, pectin, gelatin, modified starch, dextrin, zein, and whey protein, or any combination thereof.
C. The method of clause A, wherein at least one of the first film forming agents is shellac.
D. The method of clause A, wherein the coating composition is applied at a thickness of from greater than 0 to 50 mil, and wherein the coating composition dries within 30 minutes or less when exposed to drying air.
E. The method of clause A, wherein the coating composition further comprises one or more second film forming agents selected from the group consisting of maltodextrin, starch, sucrose, maltose, fructose, dextrose, glucose, sugar polyols, and corn syrup, or any combination thereof.
F. The method of clause A, wherein the coating composition comprises a surfactant, and, optionally a preservative.
G. The method of clause B, wherein the first film forming agent is one or more of the following: xanthan gum, gum Arabic, hydoxypropyl cellulose, ethyl cellulose, modified starch, dextrin, zein, and whey protein.
H. The method of clause A, wherein the composition comprises water and one or more of the following: xanthan gum, gum Arabic, guar gum, locust bean gum, agar, alginates, gum ghatti, gum karaya, gum tragacanth, chitosan, carageenans, methylcellulose, carboxymethylcellulose, hydroxypropyl methylcellulose, hydroxypropyl cellulose, pectin, gelatin, modified starch, dextrin and whey protein.
I. The method of clause A, wherein the composition comprises ethanol, isopropanol or both, and one or more of the following: ethylcellulose, hydroxypropyl cellulose, zein, and shellac.
J. The method of clause B, wherein the coating composition comprises from 30 to 99.9% by weight of the solvent, and from 0.01 to 40% by weight of the first film forming agent.
K. The method of clause B, wherein the coating composition comprises from 30 to 99.9% by weight of the solvent, and from 0.01 to 50% by weight of the first film forming agent, and from 0 to 50% by weight of a second film forming agent.
L. The method of clause B, wherein the composition comprises 30 to 99.9% by weight of the solvent; from 0.01%-40% by weight of the film forming agent, from 0 to 40 weight percent of a second film forming agent, from 0 to 5 weight percent of surfactant, and from 0 to 2 weight percent of a preservative.
M. The method of clause A, wherein the coating composition further comprises colorants that produce a colored film when the coating is dried.
N. The method of clause M, wherein the colored film is chocolate colored.
O. The method of clause A, wherein the coated product is subjected to infrared radiation.
P. The method of clause A, wherein step (b) comprises a step of drying the coating composition in air having a temperature of less than 65°C and a relative humidity of less than 50%.
Q. The method of clause A, wherein the coating composition lacks colorants, and the film that is formed when the coating composition dries is transparent or semi-transparent.
R. The method of clause A, wherein the coating composition has a solids content of 0.1 to 70 weight percent.
S. The method of clause A, wherein the coating composition has a solids content of 1.0 to 70 weight percent.
T. The method of clause A, wherein the coating composition has a solids content of 1.0 to 60 weight percent.
U. The method of clause T, wherein the coating composition has a viscosity of 100 to 1200 centipoise.
V. The method of clause A, wherein the coating composition has a viscosity of 100 to 1500 centipoise.
W. The method of clause A, wherein the coating composition has a viscosity of 10 to 1500 centipoise.

## Claims

1. A method of increasing the scuff resistance of a surface on a chocolate-coated or chocolate-enrobed product selected from biscuits, cookies and bars, comprising:
a) applying a coating composition to the surface of the chocolate, wherein the coating composition comprises:
i) a solvent selected from water, ethanol, and isopropanol, or any combination thereof;
ii) one or more first film forming agents, wherein the one or more first film forming agents provide strength and flexibility to a film that is formed when the coating composition is dried, and
b) drying the coating composition to provide a chocolatecoated or chocolate-enrobed product having a surface with increased scuff resistance.

2. The method of claim 1, wherein the coating composition is applied by spraying.

3. The method of claim 1, wherein the coating composition is applied by enrobing.

4. The method of claim 1, 2 or 3, wherein the one or more first film forming agents are selected from xanthan gum, gum arabic, guar gum, locust bean gum, agar, alginates, gum ghatti, gum karaya, gum tragacanth, chitosan, carageenans, methylcellulose, ethylcellulose, carboxymethylcellulose, hydroxypropyl methylcellulose, hydroxypropyl cellulose, pectin, gelatin, modified starch, dextrin, zein, and whey protein, or any combination thereof, preferably one or more of the following: xanthan gum, gum Arabic, hydroxypropyl cellulose, ethyl cellulose, modified starch, dextrin, zein, and whey protein.

5. The method of claim 1, 2 or 3, wherein at least one of the first film forming agents is shellac.

6. The method of any preceding claim, wherein the coating composition is applied at a thickness of from greater than 0 to 50 mil (0 to 1.27mm) and wherein the coating composition dries within 30 minutes or less when exposed to drying air.

7. The method of any preceding claim, wherein the coating composition further comprises one or more second film forming agents selected from the group consisting of maltodextrin, starch, sucrose, maltose, fructose, dextrose, glucose, sugar polyols, and corn syrup, or any combination thereof.

8. The method of any preceding claim, wherein the coating composition comprises a surfactant, and, optionally a preservative.

9. The method of claim 1, 2 or 3, wherein the composition comprises water and one or more of the following: xanthan gum, gum Arabic, guar gum, locust bean gum, agar, alginates, gum ghatti, gum karaya, gum tragacanth, chitosan, carageenans, methylcellulose, carboxymethylcellulose, hydroxypropyl methylcellulose, hydroxypropyl cellulose, pectin, gelatin, modified starch, dextrin and whey protein.

10. The method of claim 1, 2 or 3, wherein the composition comprises ethanol, isopropanol or both, and one or more of the following: ethylcellulose, hydroxypropyl cellulose, zein, and shellac.

11. The method of claim 4, wherein the coating composition comprises from 30 to 99.9% by weight of the solvent, and from 0.01 to 40% by weight of the first film forming agent.

12. The method of claim 4, wherein the coating composition comprises from 30 to 99.9% by weight of the solvent, and from 0.01 to 50% by weight of the first film forming agent, and from 0 to 50% by weight of a second film forming agent.

13. The method of claim 4, wherein the composition comprises 30 to 99.9% by weight of the solvent; from 0.01%-40% by weight of the first film forming agent, from 0 to 40 weight percent of a second film forming agent, from 0 to 5 weight percent of surfactant, and from 0 to 2 weight percent of a preservative.

14. The method of claim 1, wherein the coating composition further comprises colorants that produce a colored film when the coating is dried, preferably chocolate colored.

15. The method of claim 1, wherein the coated product is subjected to infrared radiation.

16. The method of claim 1, wherein step (b) comprises a step of drying the coating composition in air having a temperature of less than 65°C and a relative humidity of less than 50%.

17. The method of claim 1, wherein the coating composition lacks colorants, and the film that is formed when the coating composition dries is transparent or semi-transparent.

18. The method of claim 1, wherein the coating composition has a solids content of 0.1 to 70 weight percent, preferably 1.0 to 70 weight percent, more preferably 1.0 to 60 weight percent.

19. The method of claim 1, wherein the coating composition has a viscosity of 10 to 1500 centipoise, preferably 100 to 1500 centipoise, more preferably 100 to 1200 centipoise.
